# EUROPÄISCHE PATENTSCHRIFT

(11) **EP 0 475 216 B1**
(45) Veröffentlichungstag und Bekanntmachung des Hinweises auf die Patenterteilung: **28.07.1993**
(21) Anmeldenummer: 91114638.9
(22) Anmeldetag: 30.08.1991
(51) Int. Cl.: E04B 1/19, B64G 9/00

(54) **Schraubverbindung zwischen Stäben und Knotenstücken eines Raumfachwerkes oder dergleichen**
Screwjoint between struts and nodes of a spaceframe
Dispositif d'assemblage entre des poutres et des noeuds d'une structure tridimensionelle

(30) Priorität: 06.09.1990 DE 4028314
(43) Veröffentlichungstag der Anmeldung: 18.03.1992
(73) Patentinhaber: MERO-RAUMSTRUKTUR GmbH & Co. Würzburg, D-97064 Würzburg (DE)
(72) Erfinder: Stark, Manfred, W-8702 Retzstadt (DE)
(74) Vertreter: Böck, Bernhard

(56) Entgegenhaltungen:
- GB-A- 2 197 417

## Beschreibung

Die Erfindung bezieht sich auf eine Schraubverbindung zwischen Stäben und Knotenstücken eines Raumfachwerks oder dergleichen, wobei die Stäbe sich verjüngende Endstücke, z.B. Kegelstumpfstücke mit einer abgesetzten axialen Durchgangsbohrung zur Aufnahme einer Kopfschraube aufweisen, die in eine von mehreren Gewindebohrungen eines Knotenstücks eindrehbar und axial vorspannbar ist.

Eine derartige dem Oberbegriff des Anspruchs 1 oder 2 entsprechende Ausführungsform ist der GB-A-2 197. 417 zu entnehmen

Bekannte Schraubverbindungen für obige Zwecke weisen an jedem Ende eines Stabs einen Schraubbolzen auf, der jeweils in kegelstumpfförmigen Endstücken an dem Stab drehbeweglich und axial verschieblich gelagert ist. Die kegelstumpfförmigen Endstücke sind an den Stab angeschweißt. Zur Betätigung der Schraubbolzen dient jeweils eine sog. Schlüssel- oder Treibmuffe, welche mit dem Schraubbolzen drehfest verbunden ist, wobei jedoch der Schraubbolzen auch in der Treibmuffe eine axiale Bewegung ausführen kann. Im fertig montierten Zustand ist die Treibmuffe zwischen dem äußeren Stirnende eines kegelstumpfförmigen Endstücks und einem Knotenstück eingespannt (vgl. Mengeringhausen, Raumfachwerke aus Stäben und Knoten, Bauverlag GmbH Wiesbaden u. Berlin, 7. Auflage 1975, Seite 68). Der Schraubbolzen einer solchen Verbindung kann in Achsrichtung dynamischen Belastungen ausgesetzt sein, die bei längerer Dauer die Gefahr von Bolzenbrüchen mit schwerwiegenden Folgen hervorrufen können. Es ist zwar bekannt, den Schraubbolzen über die Treibmuffe mittels eines Drehmomentschlüssels so stark vorzuspannen (zu längen), daß die Vorspannkraft größer ist als die von außen einwirkenden dynamischen Belastungen. Ab einer gewissen Größe der Schraubverbindung zwischen Knotenstück und Stab und damit des Schraubbolzens ist jedoch diese Methode nicht mehr geeignet und zwar wegen der dann relativ hohen aufzubringenden Drehmomente und des dabei entstehenden Reaktionsmomentes, welches ein Verdrehen des Knotenstücks bewirkt. Zwar kann man mit sog. Hydraulikschlüsseln die erforderlichen hohen Drehmomente aufbringen. Diese Werkzeuge sind jedoch verhältnismäßig schwierig zu bedienen und arbeiten wegen sich ständig ändernde Hebearme nicht zuverlässig. Ein weiterer Mangel der obigen Konstruktion ist darin zu sehen, daß zum Einführen der Schraubbolzen in die angeschweißten kegelstumpfförmigen Endstücke ein sog. Montageloch in dem rohrförmigen Stab vorhanden sein muß.

Durch die DE-PS 3219520 ist eine Schraubverbindung der eingangs bezeichneten Bauart bekannt, bei der die Vorspannung der Schraubbolzen durch entsprechende Betätigung spezieller mehrteiliger Treibmuffen erreicht wird. Jede Treibmuffe besteht bei dieser bekannten Lösung aus mindestens zwei in Schraubbolzenlängsrichtung hintereinander liegenden Teilen, die zueinander gerichtete Schraubenflächen aufweisen, wobei durch Verdrehen dieser Teile gegeneinander der Abstand der Endflächen der Treibmuffe voneinander veränderbar ist. Wenn also die Teile der Treibmuffe axial in entgegengesetzter Richtung durch entsprechende Relativbewegung verstellt werden, werden sie gegen das jeweilige Knotenstück bzw. Stabende gedrückt und bei fortgesetzter Relativbewegung bewirken Sie die Vorspannung des Schraubbolzens. Dabei kann man diese Vorspannung so einstellen, daß sie größer ist als die auf den Schraubbolzen von außen einwirkenden dynamischen Belastungen. Solche mehrteiligen speziellen Treibmuffen sind jedoch relativ teuer und die Vorspannung der Schraubbolzen über diese Treibmuffen an der Baustelle ist immer noch relativ umständlich. Hinzu kommt, daß bei dieser bekannten Lösung die Schraubbolzen in kegelstumpfförmigen Endstücken gelagert sind, welche an den Enden eines jeden Stabs angeschweißt sind. Dadurch wird auch hier das schon oben erwähnte Montageloch im rohrförmigen Stab erforderlich.

Der Erfindung liegt die Aufgabe zugrunde, eine Schraubverbindung zwischen Stäben und Knotenstücken eines Raumfachwerks oder dergleichen zu schaffen, bei welcher der Schraubbolzen bzw. die Kopfschraube schon werksseitig einfach mit Hilfe entsprechender Vorrichtungen vorgespannt werden kann.

Gemäß der Erfindung wird diese Aufgabe dadurch gelöst, daß die sich verjüngenden Endstücke konzentrisch zur axialen Durchgangsbohrung mehrere achsparallele Bohrungen zur Aufnahme von Befestigungsschrauben enthalten, die in Gewindebohrungen in einer Anschlußplatte eindrehbar sind, welche an den Enden der Stäbe befestigt, z.B. angeschweißt ist.

Dadurch ist es möglich, schon im Werk die Endstücke mit den Knotenstücken zu verbinden und dabei die Kopfschrauben vorzuspannen, was zum Beispiel hydraulisch in einer entsprechenden Vorrichtung erfolgen kann. An der Baustelle braucht man dann lediglich die jeweils mit einem Knotenstücke verbundenen Endstücke über Befestigungsschrauben mit den Anschlußplatten an den Stäben zu verbinden. Die Befestigungsschrauben können für diesen Zweck mittels üblicher Drehmomentschlüssel angezogen werden. Eine andere Lösung für obige Aufgabe ist dadurch gekennzeichnet, daß die sich verjüngenden Endstücke konzentrisch zur axialen Durchgangsbohrung mehrere achs parallele Bohrungen zur Aufnahme von Blindnieten enthalten, die in Bohrungen in einer Anschlußplatte befestigbar sind, welche an den Enden der Stäbe befestigt, z.B. angeschweißt ist.

Bei beiden vorstehenden Lösungen entfällt in vorteilhafter Weise das beim Stand der Technik erforderliche Montageloch im Stab für die Einführung der Kopfschrauben.

Ausgestaltungen der Erfindung gehen aus den Unteransprüchen hervor. So sind vorzugsweise zwecks Gewichtseinsparung die an den Enden der Stäbe befestigten Anschlußplatten ringförmig ausgebildet. Dadurch wird auch die Herstellung eines Korrosionsschutzüberzugs im Innern der Stäbe erleichtert.

Nach noch einer weiteren Ausgestaltung der Erfindung erstrecken sich die an den Enden der Stäbe befestigten Anschlußplatten teilweise in die Stäbe und ihre aus den Stäben herausragende Abschnitte weisen vorzugsweise einen dem Stab- Außendurchmesser entsprechenden Außendurchmesser auf.

Die Montagearbeit an der Baustelle wird vereinfacht und ein guter Sitz der Befestigungsschrauben in den Endstücken wird erreicht, wenn nach noch einer weiteren Ausführungsform der Erfindung die konzentrisch angeordneten Bohrungen in den Endstücken von ringförmigen, versenkt angeordneten Auflageflächen für die Köpfe der Befestigungsschrauben umfaßt werden und zum Einführen der Befestigungsschrauben in die Bohrungen muldenförmige Ausnehmungen am Umfang der Endstücke vorgesehen sind.

Noch eine weitere Ausgestaltung der Erfindung ist dadurch gekennzeichnet, daß die sich verjüngenden Endstücke in Form von Kegelstumpfstücken an ihrem Stirnende mit dem kleineren Durchmesser einen Vorsprung in Form eines Zylinders, Sechskantstückes oder dergleichen aufweisen, durch den sich die axiale Durchgangsbohrung erstreckt. Aufgrund dieser Maßnahme kann man, wie bei den Schraubverbindungen mit Treibmuffen vorteilhaft relativ kleine Knotenstücke bei verhältnismäßig großen Stabdurchmessern verwenden.

Wenn nach noch einer weiteren Ausführungsform der Erfindung die sich verjüngenden Endstücke in Form von Kegelstumpfstücken an ihrem Stirnende mit dem größeren Durchmesser mit einem zylindrischen Abschnitt versehen sind, dessen Außendurchmesser demjenigen der Anschlußplatte und des Stabs entspricht, wird vorteilhaft ein glatter Übergang zwischen den Kegelstumpfstücken, den Anschlußplatten und dem jeweiligen Stab erreicht.

Die Erfindung wird anschließend anhand der Zeichnungen von Ausführungsbeispielen erläutert. Es zeigt:
- Fig. 1: Einen Längsschnitt durch eine fertige Schraubverbindung gemäß der Erfindung mit einem Teil eines Stabes und eines Knotenstücks von einem Raumfachwerk;
- Fig. 2: eine Schrägansicht von einem kegelstumpfförmigen Endstück mit einem zylinderförmigen Vorsprung am Stirnende mit dem kleineren Durchmesser und
- Fig. 3: eine der Fig. 2 ähnliche Schrägansicht eines weiteren kegelstumpfförmigen Endstücks, das an seinem Stirnende mit dem kleineren Durchmesser einen Vorsprung in Form eines Sechskantstückes aufweist.

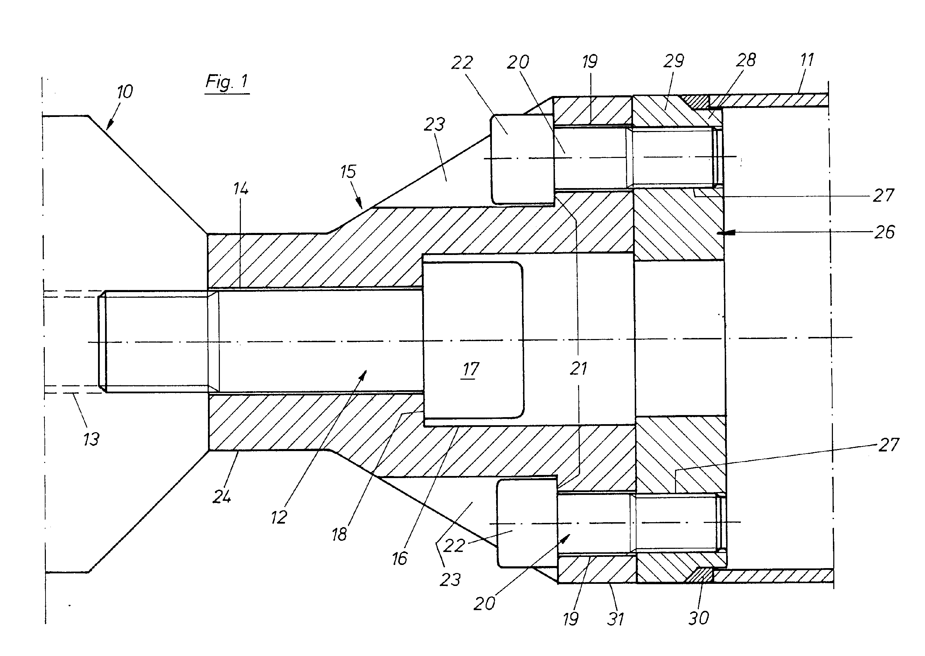

In Fig. 1 ist eine Schraubverbindung zwischen einem Knotenpunkt und Stab bei einem Raumfachwerk gezeigt, das sich aus einer Vielzahl von Stäben und Knotenstücken zusammensetzt. Mit 10 ist ein Knotenstück und mit 11 das eine Ende eines rohrförmigen Stabes von diesem Raumfachwerk bezeichnet. Zur Verbindung jedes Stabendes mit einem Knotenstück 10 dient eine Kopfschraube 12, welche in eine von zahlreichen Gewindebohrungen 13 im Knotenstück 10 eingedreht wird. Die Kopfschraube 12 erstreckt sich durch eine Durchgangsbohrung 14 in einem Endstück 15, welches beim Ausführungsbeispiel als Kegelstumpfstück ausgeführt ist. Die Durchgangsbohrung 14 hat einen im Durchmesser erweiterten Abschnitt 16 zur Aufnahme des Kopfes 17 der Schraube 12. Der Kopf 17 sitzt bei der fertigen Schraubverbindung auf einer ringförmigen Anlagefläche 18 zwischen den beiden Abschnitten der Durchgangsbohrung 14. Das Endstück 15 wird mittels der Kopfschraube 12 mit dem Knotenstück 10 werksseitig verbunden, wobei eine Vorspannung der Kopfschraube 12 eingestellt wird. Die Verbindung der Endstücke 15 mit den Stäben 11 erfolgt dann an der Baustelle und dieser Vorgang wird nachstehend beschrieben.

Jedes sich nach außen verjüngende Endstück 15 enthält beim Ausführungsbeispiel 4 konzentrisch zur Durchgangsbohrung 14 angeordnete, achsparallele Bohrungen 19 zur Aufnahme von Befestigungsschrauben 20. An den gemäß Fig. 1 linken Enden der Bohrungen 19 befinden sich ringförmige, versenkt angeordnete Auflageflächen 21 für die Köpfe 22 der Befestigungsschrauben 20. Um das Einführen der Befestigungsschrauben 20 in die Bohrungen 19 zu erleichtern, schließen sich an den Auflageflächen 21 nach außen muldenförmige Ausnehmungen 23 an.

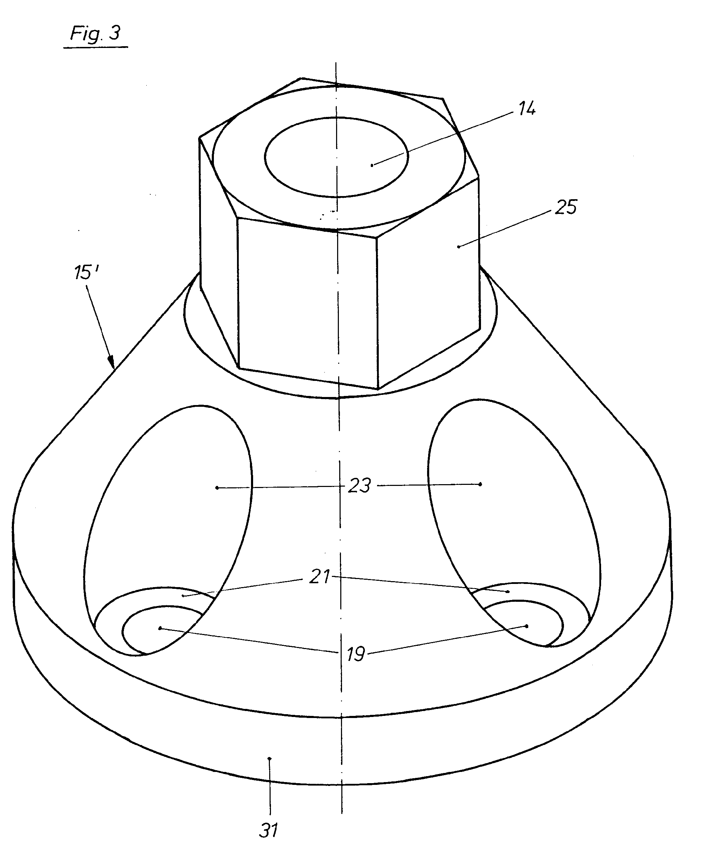

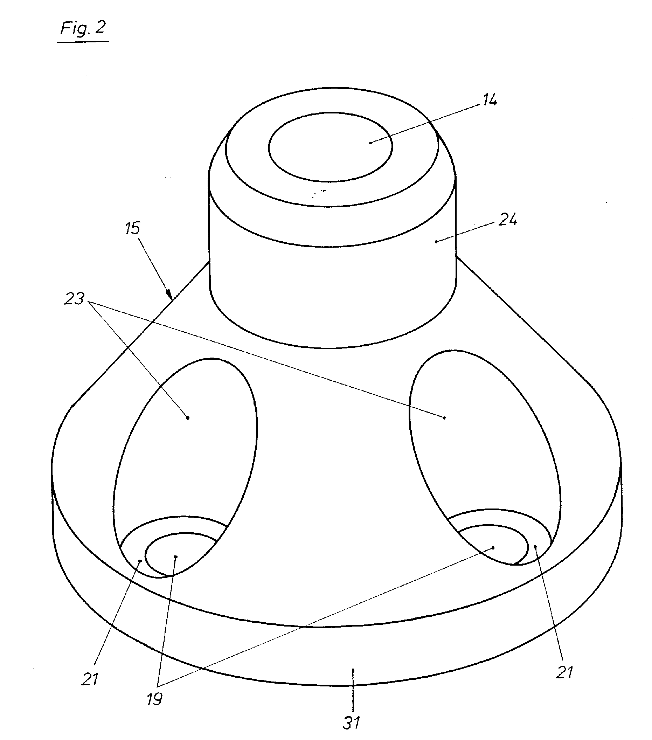

An dem Stirnende mit dem kleiner Durchmesser weist das in Fig. 2 gezeigte Endstück 15 einen Vorsprung in Form eines Zylinders 24 auf, durch den sich die Durchgangsbohrung 14 erstreckt. Beim Ausführungsbeispiel nach Fig. 3 ist anstelle des Zylinders 24 ein Vorsprung in Form eines Sechskantstückes 25 vorgesehen. Der Zylinder 24 bzw. das Sechskantstück 25 bilden ein Teil mit dem Endstück 15 bzw. 15' der Fig. 3.

An jedem Ende des Stabes 11 ist eine Anschlußplatte 26 befestigt, welche beim Ausführungsbeispiel nach Fig. 1 ringförmig ausgebildet ist und vier entsprechende Gewindebohrungen 27 enthält, in welche die Befestigungsschrauben 20 an der Baustelle eingedreht werden können, um die Gebilde aus Knotenstücken 10 und Endstücken 15 mit den Stäben 11 zu verbinden. Die Befestigungsschrauben 20 können dabei mit einem üblichen Drehmomentschlüssel angezogen werden.

Die Anschlußplatten 26 erstrecken sich mit einem Abschnitt 28 teilweise in den Hohlraum eines jeden Stabs 11. Der aus den Stab 11 herausragende Abschnitt 29 weist einen dem Stabaußendurchmesser entsprechenden Außendurchmesser auf. Mit der Bezugszahl 30 ist eine Schweißnaht bezeichnet, mittels der die Anschlußplatte 26 am Ende des Stabes 11 befestigt ist. Die kegelstumpfförmigen Endstücke 15 bzw. 15' weisen an ihrer dem Stab 11 zugewandten Seite einen zylindrischen Abschnitt 31 auf, dessen Außendurchmesser dem Außendurchmesser der Anschlußplatte 26 an ihrem Abschnitt 29 entspricht.

Anstelle der Befestigungsschrauben 20 können zur Verbindung der Endstücke 15 mit den Anschlußplatten 26 zum Beispiel auch Blindnieten (nicht gezeigt) verwendet werden. In diesem Fall sind die Gewindebohrungen 27 durch glattzylindrische Bohrungen in der Anschlußplatte 26 ersetzt.

Abschließend sei noch bemerkt, daß die Schraubverbindungen an den beiden Enden eines jeden Stabes 11 des Raumfachwerks gleichartig z.B. entsprechend Fig. 1 ausgebildet sind. In jedem Fall kann in vorteilhafter Weise die Vorspannung der Kopfschrauben 12 werksseitig in entsprechenden Vorrichtungen erfolgen.

## Patentansprüche

1. Schraubverbindung zwischen Stäben (11) und Knotenstücken (10) eines Raumfachwerks oder dergleichen, wobei die Stäbe sich verjüngende Endstücke (15), z.B. Kegelstumpfstücke, mit einer abgesetzten axialen Durchgangsbohrung (14) zur Aufnahme einer Kopfschraube (12) aufweisen, die in eine von mehreren Gewindebohrungen eines Knotenstücks (10) eindrehbar und axial vorspannbar ist, dadurch gekennzeichnet, daß die sich verjüngenden Endstücke (15) konzentrisch zur axialen Durchgangsbohrung (14) mehrere achsparallele Bohrungen (19) zur Aufnahme von Befestigungsschrauben (20) enthalten, die in Gewindebohrungen (27) in einer Anschlußplatte (26) eindrehbar sind, welche an den Enden der Stäbe (11) befestigt, z. B. angeschweißt ist.

2. Schraubverbindung zwischen Stäben (11) und Knotenstücken (10) eines Raumfachwerks oder dergleichen, wobei die Stäbe sich verjüngende Endstücke (15), z.B. Kegelstumpfstücke, mit einer abgesetzten axialen Durchgangsbohrung (14) zur Aufnahme eine Kopfschraube (12) aufweisen, die in einer von mehreren Gewindebohrungen eines Knotenstücks (10) eindrehbar und axial vorspannbar ist, dadurch gekennzeichnet, daß die sich verjüngenden Endstücke (15) konzentrisch zur axialen Durchgangsbohrung (14) mehrere achsparallele Bohrungen (19) zur Aufnahme von Blindnieten enthalten, die in Bohrungen in einer Anschlußplatte (26) befestigbar sind, welche an den Enden der Stäbe (11) befestigt, z.B. angeschweißt ist.

3. Schraubverbindung nach Anspruch 1 oder 2, dadurch gekennzeichnet, daß die an den Enden der Stäbe (11) befestigten Anschlußplatten (26) ringförmig ausgebildet sind.

4. Schraubverbindung nach einem der Ansprüche 1 bis 3, dadurch gekennzeichnet, daß die an den Enden der Stäbe (11) befestigten Anschlußplatten (26) sich teilweise in die Stäbe (11) erstrecken und ihre aus den Stäben (11) herausragende Abschnitte (29) einen dem Stab-Außendurchmesser entsprechenden Außendurchmesser aufweisen.

5. Schraubverbindung nach Anspruch 1, dadurch gekennzeichnet, daß die konzentrisch angeordneten Bohrungen (19) in den Endstücken (15) von ringförmigen, versenkt angeordneten Auflageflächen (21) für die Köpfe (22) der Befestigungsschrauben (20) umfaßt und zum Einführen der Befestigungsschrauben (20) in die Bohrungen (19) muldenförmige Ausnehmungen (23) am Umfang der Endstücke (15) vorgesehen sind.

6. Schraubverbindung nach Anspruch 1 oder 2, dadurch gekennzeichnet, daß die sich verjüngenden Endstücke (15) in Form von Kegelstumpfstücken an ihrem Stirnende mit dem kleineren Durchmesser einen Vorsprung in Form eines Zylinders (24), Sechskantstückes (25) oder dergleichen aufweisen, durch den sich die axiale Durchgangsbohrung (14) erstreckt.

7. Schraubverbindung nach Anspruch 1 oder 2, dadurch gekennzeichnet, daß die sich verjüngenden Endstücke (15) in Form von Kegelstumpfstücken an ihrem Stirnende mit dem größeren Durchmesser mit einem zylindrischen Abschnitt (31) versehen sind, dessen Außendurchmesser demjenigen der Anschlußplatte (26) und des Stabs (11) entspricht.

## Claims

1. Screw joint between rods (11) and junction pieces (10) of a space frame or the like, the rods having tapering end pieces (15), for example frustoconical pieces, with a stepped axial through hole (14) for receiving a cap screw (12) which can be screwed into one of several tapped holes in a junction piece (10) and car be axially prestressed, characterised in that the tapering end pieces (15) contain a plurality of axis-parallel holes (19) concentric with the axial through hole (14) and for receiving fixing bolts (20) which can be screwed into tapped holes (27) in a connecting plate (26) fixed, for example welded, to the ends of the rods (11).

2. Screw joint between rods (11) and junction pieces (10) of a space frame or the like, the rods having tapering end pieces (15), for example frustoconical pieces, with a stepped axial through hole (14) for receiving a cap screw (12) which can be screwed into one of several tapped holes in a junction piece (10) and can be axially prestressed, characterised in that the tapering end pieces (15) contain a plurality of axis-parallel holes (19) concentric with the axial through hole (14) and for receiving blind rivets which can be fixed in holes in a connecting plate (26) fixed, for example welded, to the ends of the rods (11).

3. Screw joint according to claim 1 or 2, characterised in that the connecting plates (26) fixed to the ends of the rods (11) are of annular form.

4. Screw joint according to any one of claims 1 to 3, characterised in that the connecting plates (26) fixed to the ends of the rods (11) extend partially into the rods (11) and their portions (29) projecting from the rods (11) have an external diameter corresponding to the external diameter of the rods.

5. Screw joint according to claim 1, characterised in that the concentrically arranged holes (19) in the end pieces (15) are surrounded by annular countersunk bearing surfaces (21) for the heads (22) of the fixing bolts (20) and are provided with trough-shaped openings (23) at the periphery of the end pieces (15) for introducing the fixing bolts (20) into the holes (19).

6. Screw joint according to claim 1 or 2, characterised in that the tapering end pieces (15) in the form of frustoconical pieces have a projection in the form of a cylinder (24), hexagonal piece (25) or the like at their end with the smaller diameter and through which the axial through hole (14) extends.

7. Screw joint according to claim 1 or 2, characterised in that the tapering end pieces (15) in the form of frustoconical pieces are provided at their end with the larger diameter with a cylindrical portion (31) whose external diameter corresponds to that of the connecting plate (26) and the rod (11).

## Revendications

1. Assemblage par boulonnage entre barres (11) et ferrures nodales (10) d'une charpente à trois dimensions ou analogue, les barres comprenant des pièces d'extrémité (15) qui comportent un rétrécissement, par exemple des pièces en tronc de cône comportant un trou axial traversant (14) à épaulenent pour le logement d'une vis à tête (12) qui se visse et se serre axialement dans l'un de plusieurs trous taraudés d'une ferrure nodale (10), caractérisé en ce que les pièces d'extrémité (15) qui comportent un rétrécissement comprennent concentriquement au trou axial traversant (14) plusieurs trous (19) parallèles à l'axe et destinés au logement de vis de fixation (20) qui se vissent dans des trous taraudés (27) d'une plaque d'assemblage (26) qui est fixée, par exemple rapportée par soudage, aux extrémités des barres (11).

2. Assemblage par boulonnage entre barres (11) et ferrures nodales (10) d'une charpente à trois dimensions ou analogue, les barres comprenant des pièces d'extrémité (15) qui comportent un rétrécissement, par exemple des pièces en tronc de cône comportant un trou axial traversant (14) à épaulement pour le logement d'une vis à tête (12) qui se visse et se serre axialement dans l'un de plusieurs trous taraudés d'une ferrure nodale (10), caractérisé en ce que les pièces d'extrémité (15) qui comportent un rétrécissement comprennent concentriquement au trou axial traversant (14) plusieurs trous (19) parallèles à l'axe destinés au logement de rivets borgnes qui se fixent dans des trous d'une plaque d'assemblage (26) qui est fixée, par exemple rapportée par soudage, aux extrémités des barres (11).

3. Assemblage par boulonnage selon la revendication 1 ou 2, caractérisé en ce que les plaques d'assemblage (26) fixées aux extrémités des barres (11) sont annulaires.

4. Assemblage par boulonnage selon l'une des revendications 1 à 3, caractérisé en ce que les plaques d'assemblage (26) fixées aux extrémités des barres (11) pénètrent partiellement dans les barres (11) et leur partie (29) qui est saillante sur les barres (11) a un diamètre extérieur qui correspond au diamètre extérieur des barres.

5. Assemblage par boulonnage selon la revendication 1, caractérisé en ce que les trous (19) disposés concentriquement dans les pièces d'extrémité (15) sont entourés extérieurement de surfaces annulaires noyées (21) d'appui des têtes (22) des vis de fixation (20) et comportent, pour l'introduction des vis de fixation (20) dans les trous (19), des évidements (23) en forme de fraisures à la circonférence des pièces d'extrémité (15).

6. Assemblage par boulonnage selon la revendication 1 ou 2, caractérisé en ce que les pièces d'extrémité (15) qui comportent un rétrécissement et qui ont la forme de pièces en tronc de cône comportent à l'extrémité frontale de petit diamètre une protubérance en forme d'un cylindre (24), d'une pièce à six pans (25) ou analogue que traverse le trou axial (14).

7. Assemblage par boulonnage selon la revendication 1 ou 2, caractérisé en ce que les pièces d'extrémité (15) qui comportent un rétrécissement et qui ont la forme de pièces en tronc de cône comportent à l'extrémité frontale de grand diamètre une partie cylindrique (31) dont le diamètre extérieur correspond à celui de la plaque d'assemblage (26) et de la barre (11).
